# EUROPEAN PATENT APPLICATION

(11) **EP 4 644 459 A1**
(43) Date of publication of application: **05.11.2025**
(21) Application number: 24736968.9
(22) Date of filing: 26.02.2024
(51) Int. Cl.: C08G 61/00, C08G 61/12, B01J 39/04, C25B 13/08, C25B 1/04

(54) **POLYMER, MANUFACTURING METHOD THEREFOR, AND ANION EXCHANGE MATERIAL COMPRISING SAME**

(30) Priority: 30.12.2022 KR 20220190752
(71) Applicant: Hanwha Solutions Corporation, Jung-gu Seoul 04541 (KR)
(72) Inventor: LIM, You Sun, Daejeon 34128 (KR); JANG, Sang Jin, Daejeon 34128 (KR); LEE, Hyun Seung, Daejeon 34128 (KR); HAN, Junyoung, Daejeon 34128 (KR)
(74) Representative: Berggren Oy
(86) International application number: PCT/IB2024/051803
(87) International publication number: WO 2024/142033

(57) **Abstract**

The present disclosure provides polymer having a stable structure, a manufacturing method thereof, and material for anion exchange with excellent efficiency comprising the same.

## Description

### [TECHNICAL FIELD]

The present disclosure relates to polymer, manufacturing method thereof and material for anion exchange comprising the same.

### [BACKGROUND ART]

At the present time when development of environmentally friendly fuel is the topic, among commercialized technologies, water electrolysis is the only technology capable of most perfectly producing green hydrogen. The water electrolysis technology is classified into Proton Exchange Membrane Electrolysis Cell (PEMEC), Alkaline Electrolysis Cell (AEC), and Solid Oxide Electrolysis Cell (SOEC) according to detailed components. Since AEC has a history of more than 100 years and both the market and technology are mature, it is difficult to expect equipment production cost and operation cost reduction effect according to technology development. Further, AEC has low hydrogen production density, and thus, expansion of production scale and enlargement of equipment and facilities are unavoidable to produce large volume of hydrogen, and thus, it is difficult to secure economics. PEMEC, which is a technology commercialized in recent years, can immediately produce high purity high pressure hydrogen in compact facilities, and there is a strong possibility that production cost and operation cost will be reduced through the technology development. However, since it is a technology commercialized in recent years and long-time operation data has not been secured, it is difficult to ensure stability, and the production and processing cost of the material of a separator or bipolar plate necessarily used in accordance with the acidic operation condition may account for a large proportion of the production cost and be a burden. SOEC has unique advantages of being used as electrolytic cell or fuel cell with the same construction according to operation mode. However, since the catalyst component solid oxide is vulnerable to physical shock, it can be stably applied only for fixed type facilities, and since the temperature of water used in the process is very high, it should be installed in the vicinity of a place where ultra-high temperature water is produced, such as steelworks or nuclear power plant.

Thus, as an alternative for solving the problem of the existing water electrolysis method, Anion Exchange Membrane Electrolysis Cell (AEMEC) is being suggested. Since AEMEC can produce high density hydrogen in a similar way to the hydrogen production density of PEMEC, the facility scale is small, and since it utilizes AEC material, production cost is low. However, the biggest obstacle to the commercialization of AEMEC is an anion exchange membrane with confirmed durability, and thus, there is a demand for development thereof.

### [DETAILED DESCRIPTION OF THE INVENTION]

### [Technical Problem]

It is an object of the invention to provide polymer, a manufacturing method thereof and material for anion exchange comprising the same.

Specifically, it is an object of the invention to provide polymer having high ion conductivity and a stable structure, a manufacturing method thereof and material for anion exchange with excellent efficiency comprising the same.

It is another object of the invention to provide a method for manufacturing polymer that can be used in material for anion exchange without requiring separate separation or purification process.

### [Technical Solution]

According to the present disclosure, there is provided polymer comprising repeat units represented by the following Chemical Formula 1 or Chemical Formula 2: 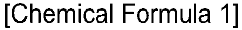 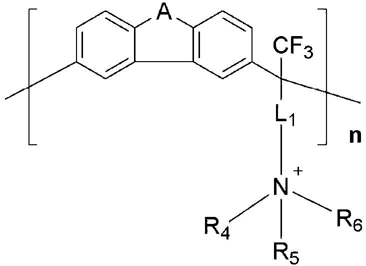 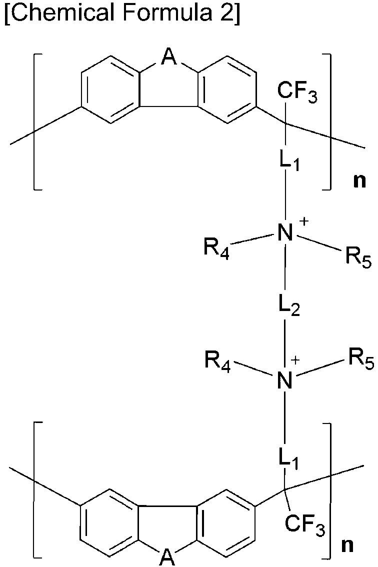
wherein, n is an integer of 100 to 100,000,
A is NR₁ or CR₂R₃,
R₁ is substituted or unsubstituted C₁₋₁₀ alkyl,
R₂ and R₃ are each independently, hydrogen or substituted or unsubstituted C₁₋₁₀ alkyl,
R₄ to R₆ are each independently substituted or unsubstituted C₁₋₁₀ alkyl, or, R₄ and R₅ are bonded with each other to form a C₃₋₁₂ ring,
L₁ and L₂ are each independently substituted or unsubstituted C₁₋₁₂ alkylene.

According to the present disclosure, there is also provided material for anion exchange comprising the polymer.

According to the present disclosure, there is also provided a method for manufacturing polymer comprising: reacting substituted or unsubstituted carbazole or fluorene with halogen-substituted alkyl trifluoromethyl ketone in the presence of an acid catalyst to polymerize (step 1); and substituting substituted or unsubstituted amine for the polymer prepared in step 1 to form polymer comprising a quaternary ammonium ion represented by the Chemical Formula 1 or Chemical Formula 2 (step 2).

### [ADVANTAGEOUS EFFECTS]

The polymer according to the present disclosure does not comprise an ether bond in the backbone, and thus, may be structurally stable.

Further, material for anion exchange comprising the polymer according to the present disclosure has high ion conductivity, and thus, has excellent efficiency.

Further, material for anion exchange comprising the polymer according to the present disclosure may exhibit stable property under high temperature, basic condition.

Further, the manufacturing method of polymer according to the present disclosure does not use a metal catalyst, and thus, does not require a separate separation or purification process.

Further, high purity product can be obtained with high yield without a separate separation or purification process.

### [BRIEF DESCRIPTION OF THE DRAWINGS]

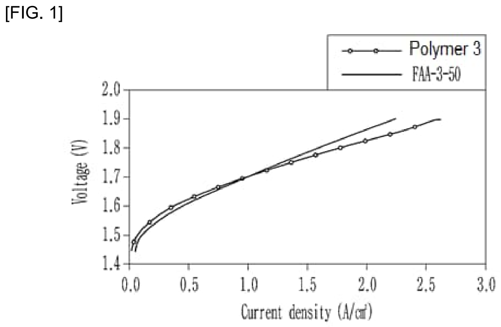

Fig 1 shows a graph measuring and comparing electricity consumption of Example 3 and Comparative Example.

### [DETAILED DESCRIPTION OF THE EMBODIMENTS]

As used herein, terms "a first", "a second" and the like are used to explain various constructional elements, and they are used only to distinguish one constructional element from other constructional elements.

Further, the terms used herein are only to explain specific embodiments, and are not intended to limit the invention. The singular expressions used herein may include the plural expressions unless the context clearly indicate otherwise. Throughout the specification, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

Further, in case it is stated that each layer or element is formed "on" or "above" each layer or element, it means that each layer or element is formed right above each layer or element, or that other layers or elements may be additionally formed between the layers or on the object or substrate.

Although various modifications can be made to the invention and the invention may have various forms, specific examples will be illustrated and explained in detail below. However, it should be understood that it is not intended to limit the invention to specific disclosure, and that the invention includes all the modifications, equivalents or replacements thereof without departing from the spirit and technical scope of the invention.

The present disclosure aims to provide polymer prepared using an acid catalyst polymerization reaction, a manufacturing method thereof, and material for anion exchange comprising the same.

Particularly, the present disclosure aims to provide polymer produced by introducing a quaternary ammonium functional group into a polymer polymerized from an aromatic compound of a plane structure such as carbazole, fluorene, and the like and a ketone-based compound by an acid catalyst polymerization reaction, a manufacturing method thereof, and material for anion exchange comprising the same.

Hereinafter, the polymer of the present disclosure will be explained in detail.

The polymer of the present disclosure comprises repeat units represented by the following Chemical Formula 1 or Chemical Formula 2: 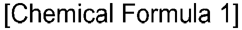 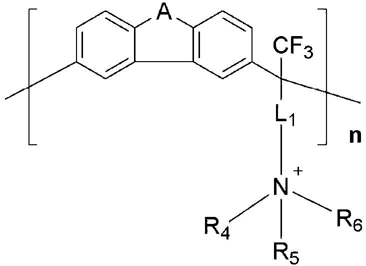 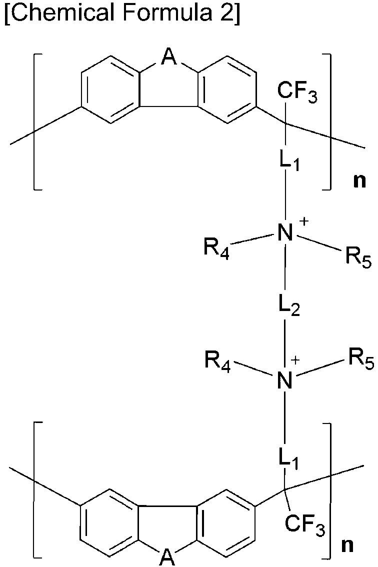
wherein, n is an integer of 100 to 100,000,
A is NR₁ or CR₂R₃,
R₁ is substituted or unsubstituted C₁₋₁₀ alkyl,
R₂ and R₃ are each independently, hydrogen or substituted or unsubstituted C₁₋₁₀ alkyl,
R₄ to R₆ are each independently substituted or unsubstituted C₁₋₁₀ alkyl, or, R₄ and R₅ are bonded with each other to form a C₃₋₁₂ ring,
L₁ and L₂ are each independently substituted or unsubstituted C₁₋₁₂ alkylene.

Preferably, the Chemical Formula 1 may be represented by the following Chemical Formula 1-1 or Chemical Formula 1-2.

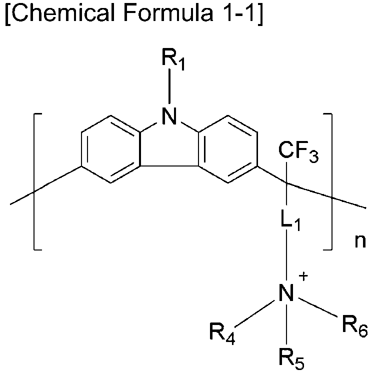

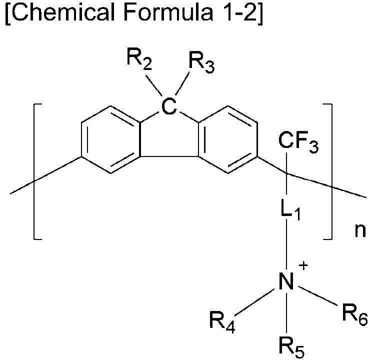

Wherein, n is the number of repeat units in polymer. Specifically, n is an integer of 100 to 100,000.

Preferably, the R₁ is methyl; ethyl; or hexyl.

Preferably, the R₂ and R₃ are each independently, hydrogen.

Preferably, the R₄ to R₆ are each independently methyl; or R₄ and R₅ are bonded with each other to form a 6-membered alkyl ring containing N, and R₆ is methyl. Namely, the ammonium group of the [Chemical Formula 1] having R₄ to R₆ substituent groups is trimethylammonium; or 2-methylpiperidinium.

Preferably, L₁ is pentylene.

The compound represented by the Chemical Formula 2 comprises substituted or unsubstituted bis-ammonium having a C₁₋₁₀ hydrocarbon-based bridge L₂ formed by binding of the substituents of the ammonium groups of neighboring polymers with each other. Preferably, L₂ is pentylene. More preferably, the substituted or unsubstituted bis-ammonium structure may be 1,5-bis(dimethylpentylammonium)pentane.

The bridge of the compound represented by the Chemical Formula 2 may be randomly positioned at 2 polymer chains, and more densely crosslinked membrane may be obtained.

The polymer may comprise 100 to 10,000 repeat units of the Chemical Formula 1 or Chemical Formula 2.

The polymer may have weight average molecular weight(M_{w}) of 40,000 to 4,000,000 Da.

The polymer comprising repeat units represented by the Chemical Formula 1 or Chemical Formula 2 is one selected from the group consisting of the followings.

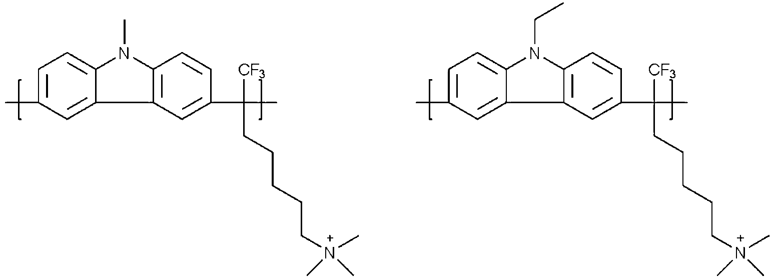

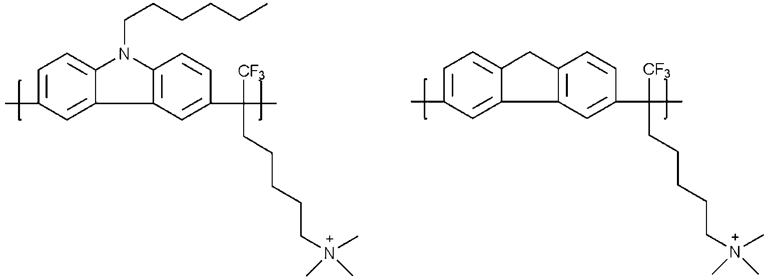

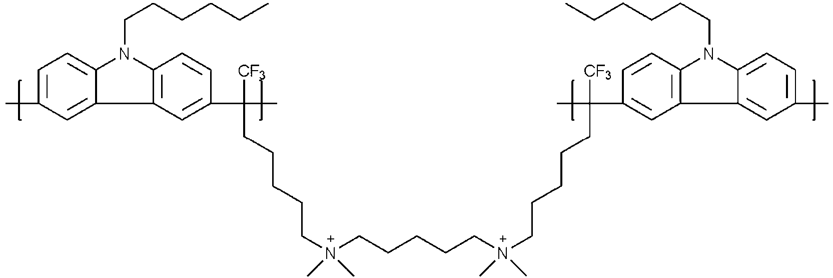

Further, the present disclosure may provide material for anion exchange comprising the polymer. Specifically, the material for anion exchange may be used for construction of a membrane and ionomer in anion exchange membrane electrolysis cell.

Hereinafter, a manufacturing method of polymer according to the present disclosure will be explained in detail.

The manufacturing method of polymer of the present disclosure comprises:
reacting substituted or unsubstituted carbazole or fluorene with halogen-substituted alkyl trifluoromethyl ketone in the presence of an acid catalyst to polymerize (step 1); and
substituting substituted or unsubstituted amine for the polymer prepared in step 1 to form polymer comprising a quaternary ammonium ion represented by the Chemical Formula 1 or Chemical Formula 2 (step 2).

The step 1 may be represented by the following Reaction Formula 1.

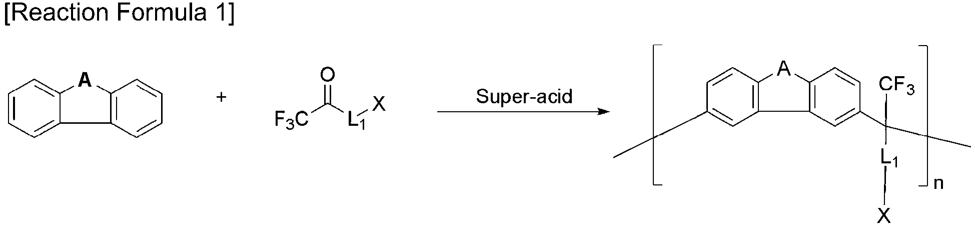

The step 2 may be represented by the following Reaction Formula 2.

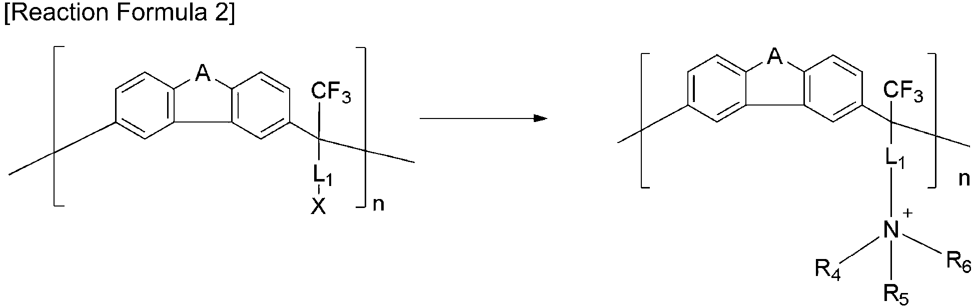

The substituted carbazole or fluorene of the (step 1) may be prepared by reacting 9H-carbazole or fluorene with alkyl halide under a base condition. The base may be potassium hydroxide, or sodium hydroxide. The alkyl halide may be iodomethane, or iodohexane. The substituted carbazole may be 9-methyl-9H-carbazole, 9-ethyl-9H-carbazole, or 9-hexyl-9H-carbazole.

The (step 2) may further comprise substituting substituted or unsubstituted diamine for 2 or more polymers prepared to form polymer comprising substituted or unsubstituted bis-ammonium having a C₁₋₁₀ hydrocarbon-based bridge (step 2-1). The (step 2-1) may be represented by the following Reaction Formula 2-1. Specifically, in the manufacturing method of the present disclosure, the (step 2-1) may be conducted after the (step 2).

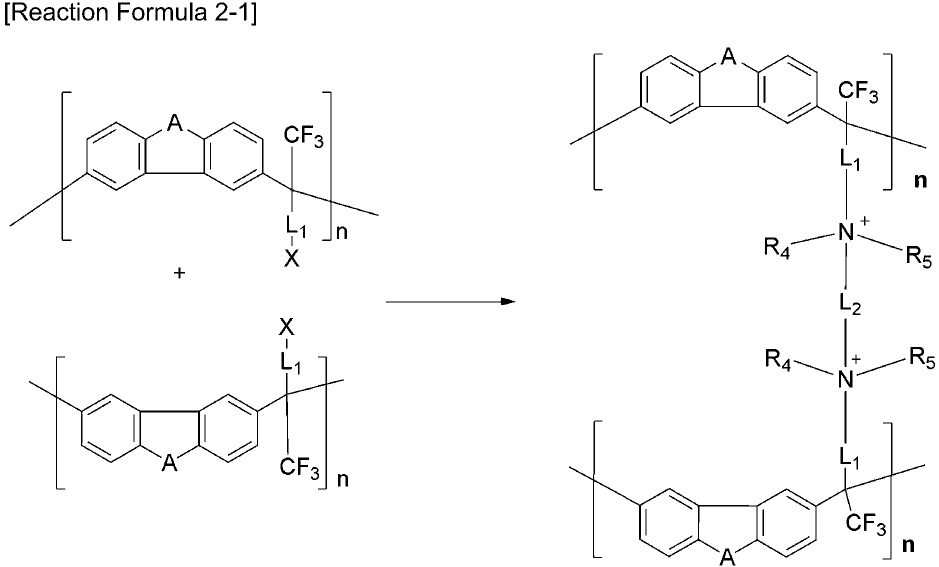

In the Reaction Formula, R₁, R₂, R₃, R₄, R₅, R₆, L₁, L₂ and n are as defined in the Chemical Formula 1 or Chemical Formula 2, and X is a halogen element. Specifically, X may be chloro, bromo, or iodo.

The bridge formed through the Reaction Formula 2-1 may be formed anywhere, so long as it is a location to which substituted or unsubstituted diamine can be bonded in the polymer chain, and it may be randomly formed. Thereby, a more densely crosslinked membrane may be obtained.

The acid catalyst of the (step 1) may be super strong acid, and specifically, may be trifluoroacetic acid, trifluoromethanesulfonic acid, methanesulfonic acid, or a mixture thereof.

The (step 1) may progress in the presence of an organic solvent. Specifically, it may progress in the presence of a dichloromethane solvent.

The substituted or unsubstituted amine of the (step 2) may be selected from the group consisting of trimethylamine, triethylamine and methylpiperidine.

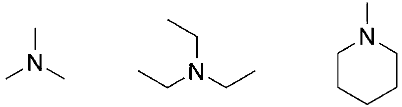

The substituted or unsubstituted diamine of the (step 2-1) may be selected from the group consisting of the following compounds.

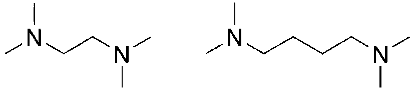

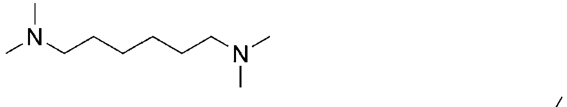

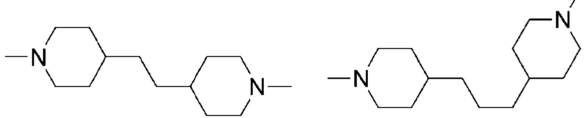

Hereinafter, preferable examples will be presented to assist in understanding of the invention. However, these examples are presented only as illustrations of the invention, and the invention is not limited thereby.

The information about the reagents used in the following Example 1 to Example 5 is as shown in the following Table 1.

**[Table 1]**

| Compound name | CAS No. | Manufacturing company | Purity |
|---|---|---|---|
| 9H-carbazole | 86-74-8 | TCI | > 97 % (GC) |
| 9-ethylcarbazole | 86-28-2 | TCI | > 97 % (GC) |
| Fluorene | 86-73-7 | TCI | > 95 % |
| iodomethane | 74-88-4 | Sigma-Aldrich | 99 % |
| 1-iodohexane | 638-45-9 | Sigma-Aldrich | > 95 % |
| Potassium hydroxide | 1310-58-3 | Samchun chemical | 95.0 % |
| 7-bromo-1,1,1-trifluoroheptan-2-one | 647831-24-1 | SynQuest Laboratories | <= 100 % |
| Trifluoromethanesulfonic acid | 1493-13-6 | Oakwood Chemical | 99.5 % |
| Dichloromethane | 75-09-2 | Sigma-Aldrich | >= 99.8 % |
| Trimethylamine solution | 75-50-3 | Sigma-Aldrich | - |
| N,N-dimethylacetamide | 127-19-5 | Samchun chemical | 99.5 % (GC) |

### Example 1 : Synthesis of polymer 1

In a solvent N,N-dimethylacetamide (2 ml), potassium hydroxide (1,010 mg) was dissolved. 9H-carbazole (500 mg) was added thereto, and stirred for 30 minutes. lodomethane (0.28 ml) was added thereto and stirred. The progression of the reaction was confirmed by TLC (Thin Layer Chromatography). After confirming termination of reaction, DI water (2 ml) was added to the reactant. The final reaction mixture was filtered to obtain a solid content N-methylcarbazole, and it was dried.

In a solvent dichloromethane (2 ml), the reaction product solid content N-methylcarbazole (442 mg), and 7-bromo-1,1,1-trifluoroheptan-2-one (843 mg) were added, and stirred under nitrogen atmosphere. The reaction mixture was soaked in an ice bath, and then, trifluoromethanesulfonic acid (0.34 ml) was added dropwise as an acid catalyst. The ice bath was removed, the temperature of the reaction mixture was raised to a room temperature, and the reaction mixture was stirred. When the viscosity of the reaction mixture increased, it was slowly poured into methanol (100 ml). The produced solid content was washed with methanol several times and dried to obtain polymer having weight average molecular weight of 96,340 Da.

To N,N-dimethylacetamide (10 ml), the produced polymer (1,000 mg) was added and dissolved. An amine reagent trimethylamine (1.73 ml) was added thereto and sufficiently stirred at room temperature. After confirming termination of reaction, the reaction mixture was slowly poured into diethylether (100 ml). The solid content of the solution was washed with diethylether several times, filtered and dried to obtain the final product of Example 1.

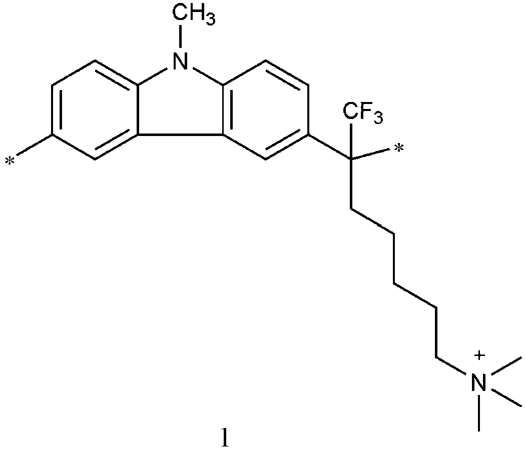

### Example 2 : Synthesis of polymer 2

An N-ethylcarbazole reagent was purchased.

In a solvent dichloromethane (1.75 ml), N-ethylcarbazole (460 mg), and 7-bromo-1,1,1-trifluoroheptan-2-one (815 mg) were added and stirred under nitrogen atmosphere. The reaction mixture was soaked in an ice bath, and then, trifluoromethanesulfonic acid (0.33 ml) was added dropwise as an acid catalyst. The ice bath was removed, the temperature of the reaction mixture was raised to a room temperature, and the reaction mixture was stirred. When the viscosity of the reaction mixture increased, it was slowly poured into methanol (100 ml). The produced solid content was washed with methanol several times, and then, dried to obtain polymer having weight average molecular weight of 89,892 Da.

To N,N-dimethylacetamide (8.14 ml), the produced polymer (850 mg) was added and dissolved. To the reaction mixture, an amine reagent trimethylamine (1.43 ml) was added and sufficiently stirred at room temperature. After confirming termination of reaction, the reaction mixture was slowly poured into diethylether (100 ml). The solid content of the solution was washed with diethylether several times, filtered and dried to obtain the final product.

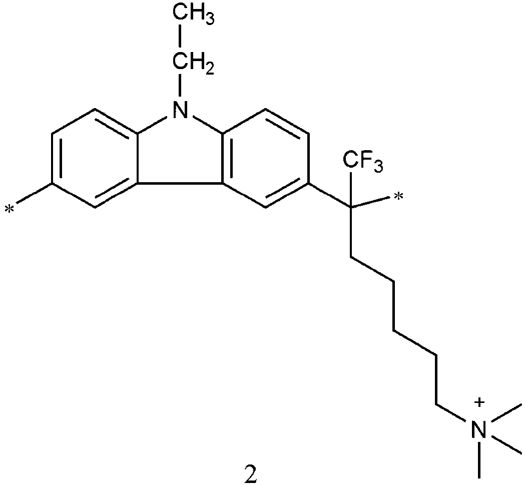

### Example 3 : Synthesis of polymer 3

In a solvent N,N-dimethylacetamide (4 ml), potassium hydroxide (670 mg) was dissolved. To the mixture, 9H-carbazole (665 mg) was added, and stirred for 30 minutes. To the mixture, iodohexane (0.88 ml) was added and stirred. The progression of the reaction was confirmed by TLC (Thin Layer Chromatography). After confirming termination of reaction, DI water (4 ml) was added to the reactant. The final reaction mixture was filtered, and then, dried to obtain a solid content N-hexylcarbazole.

In a solvent dichloromethane (3.51 ml), N-hexylcarbazole (1,046 mg) obtained above, and 7-bromo-1,1,1-trifluoroheptan-2-one (1,234 mg) were added, and stirred under nitrogen atmosphere. The reaction mixture was soaked in an ice bath, and then, trifluoromethanesulfonic acid (0.59 ml) was added dropwise as an acid catalyst. The ice bath was removed, the temperature of the reaction mixture was raised to a room temperature, and the reaction mixture was stirred. When the viscosity of the reaction mixture increased, it was slowly poured into methanol (100 ml). The produced solid content was washed with methanol several times, and then, dried to obtain polymer having weight average molecular weight of 96,340 Da.

In N,N-dimethylacetamide (10.9 ml), the produced polymer (1,803 mg) was dissolved. To the reaction mixture, an amine reagent trimethylamine (2.68 ml) was added and sufficiently stirred at room temperature. After confirming termination of reaction, the reaction mixture was slowly poured into diethylether (200 ml). The solid content of the solution was washed with diethylether several times, filtered and dried to obtain the final product.

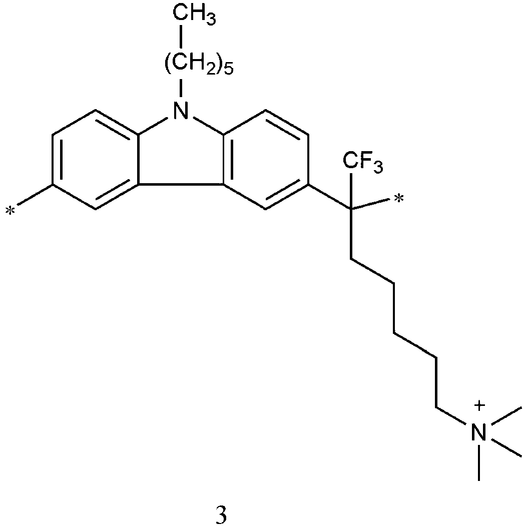

### Example 4 : Synthesis of polymer 4

A fluorene reagent was purchased.

In a solvent dichloromethane (1.75 ml), fluorene (420 mg), and 7-bromo-1,1,1-trifluoroheptan-2-one (750 mg) were added, and stirred under nitrogen atmosphere. The reaction mixture was soaked in an ice bath, and then, trifluoromethanesulfonic acid (0.67 ml) was added dropwise as an acid catalyst. The ice bath was removed, the temperature of the reaction mixture was raised to a room temperature, and the reaction mixture was stirred. When the viscosity of the reaction mixture increased, it was slowly poured into methanol (100 ml). The produced solid content was washed with methanol several times, and then, dried to obtain polymer having weight average molecular weight of 264,294 Da.

In N,N-dimethylacetamide (9.57 ml), the obtained polymer (1,000 mg) was dissolved. To the reaction mixture, an amine reagent trimethylamine (1.81 ml) was added and sufficiently stirred at room temperature. After confirming termination of reaction, the reaction mixture was slowly poured into diethylether (100 ml). The solid content of the solution was washed with diethylether several times, filtered and dried to obtain the final product.

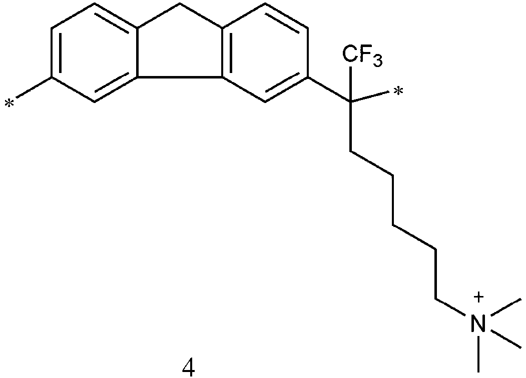

### Example 5 : Synthesis of polymer 5

In a solvent N,N-dimethylacetamide (4 ml), potassium hydroxide (670 mg) was dissolved. To the mixture, 9H-carbazole (665 mg) was added, and stirred for 30 minutes. To the mixture, iodohexane (0.88 ml) was added and stirred. The progression of the reaction was confirmed by TLC (Thin Layer Chromatography). After confirming termination of reaction, DI water (4 ml) was added to the reactant. The final reaction mixture was filtered, and then, dried to obtain a solid content N-hexylcarbazole.

In a solvent dichloromethane (3.51 ml), N-hexylcarbazole (1,046 mg) synthesized above, and 7-bromo-1,1,1-trifluoroheptan-2-one (1,234 mg) were added, and stirred under nitrogen atmosphere. The reaction mixture was soaked in an ice bath, and then, trifluoromethanesulfonic acid (0.59 ml) was added dropwise as an acid catalyst. The ice bath was removed, the temperature of the reaction mixture was raised to a room temperature, and the reaction mixture was stirred. When the viscosity of the reaction mixture increased, it was slowly poured into methanol (100 ml). The produced solid content was washed with methanol several times, and then, dried to obtain polymer having weight average molecular weight of 96,340 Da.

In N,N-dimethylacetamide (10.9 ml), the obtained polymer (1,803 mg) was dissolved. To the reaction mixture, an amine reagent trimethylamine (0.89 ml) was added and stirred at room temperature. The degree of progression of the reaction was confirmed by 1H-NMR. After confirming termination of reaction, the reaction mixture was slowly poured into diethylether (200 ml). The solid content of the solution was washed with diethylether several times, filtered and dried.

In N,N-dimethylacetamide (18 ml), the reaction product (2,000 mg) was dissolved. To the reaction mixture, N,N,N',N'-tetramethylhexamethylenediamine (49 mg) was added and stirred at room temperature. Before the reaction mixture became a lump, it was casted on a glass plate to obtain the final product.

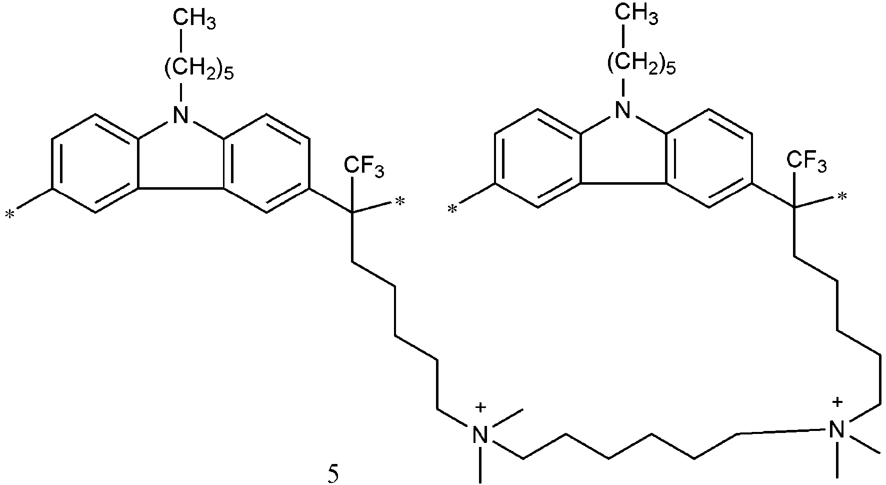

### Comparative Example

A commercial anion exchange membrane FAA-3-50 was prepared.

### Experimental Example 1 - ion conductivity

Ion conductivity was measured using BT-512 manufactured by Bekkech.

A membrane specimen with a width of 0.7cm and a length of 4cm was prepared. The thickness of the specimen was measured and the surface was washed with distilled water. The washed specimen was soaked in 1M KOH aqueous solution and kept at room temperature for 24 hours. The specimen was washed thoroughly and assembled to a 4-probe cell, and it was soaked in distilled water and connected to the apparatus, and conductivity was measured at 80 °C with conductivity measuring program.

### Experimental Example 2 - Stability under high temperature basic condition

A 100ml Teflon airtight container was filled with 1M KOH aqueous solution, and then, a membrane specimen of 3 cm width and length was put therein and kept at 80 °C for 1000 hours. After the lapse of time, the state of the membrane was confirmed with a naked eye.

**[Table 2]**

| | Thickness | Ion conductivity [mS/cm] | Stability under high temperature basic condition |
|---|---|---|---|
| FAA-3-50 (commercial material) | 50 um | 65 | Melt |
| Example 3 | 30 um | 100 | Not melt |

### Experimental Example 3 - Measurement of electricity consumption

On both sides of a membrane of 5cm width and length, anode and cathode electrodes were respectively coated. The manufactured MEA (Membrane electrode assembly) was put in 5cm² AEM water electrolysis cell. An electric wire was connected to the AEM water electrolysis cell electrode, and voltage change according to current density change was measured with a potentiostat (measurement condition: 1M KOH, 60 °C).

As the result, when comparing a commercial anion exchange membrane FAA-3-50 with Example 3, in the high current density section, Example 3 exhibited lower voltage value than Comparative Example, as shown in Fig. 1. This result means that when producing the same amount of hydrogen, electricity consumption decreases by using the polymer material of Example 3.

## Claims

1. Polymer comprising repeat units represented by the following Chemical Formula 1 or Chemical Formula 2: 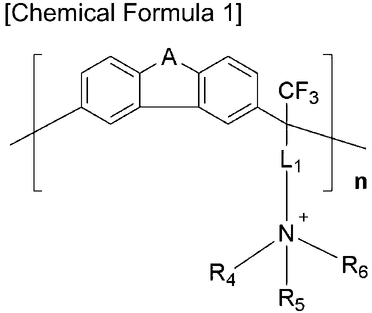 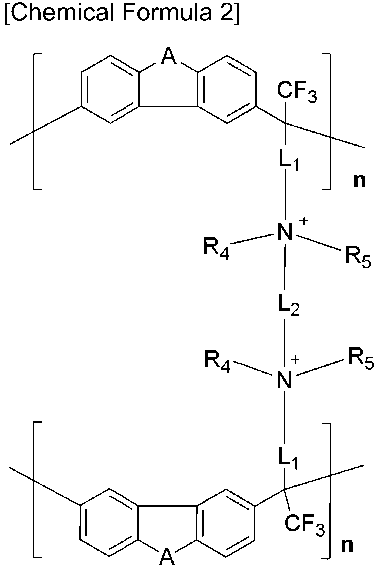
wherein, n is an integer of 100 to 100,000,
A is NR₁ or CR₂R₃,
R₁ is substituted or unsubstituted C₁₋₁₀ alkyl,
R₂ and R₃ are each independently, hydrogen or substituted or unsubstituted C₁₋₁₀ alkyl,
R₄ to R₆ are each independently substituted or unsubstituted C₁₋₁₀ alkyl, or, R₄ and R₅ are bonded with each other to form a C₃₋₁₂ ring,
L₁ and L₂ are each independently substituted or unsubstituted C₁₋₁₂ alkylene.

2. The polymer according to claim 1, wherein R₁ is methyl; ethyl; or hexyl.

3. The polymer according to claim 1, wherein R₂ and R₃ are each independently, hydrogen.

4. The polymer according to claim 1, wherein L₁ is pentylene.

5. The polymer according to claim 1, wherein R₄ to R₆ are each independently methyl; or R₄ and R₅ are bonded with each other to form a 6-memberd alkyl ring containing N, and R₆ is methyl.

6. The polymer according to claim 1, wherein L₂ in the Chemical Formula 2 is penthylene.

7. The polymer according to claim 1, wherein the polymer comprising the repeat units represented by the Chemical Formula 1 is one selected from the group consisting of the followings:

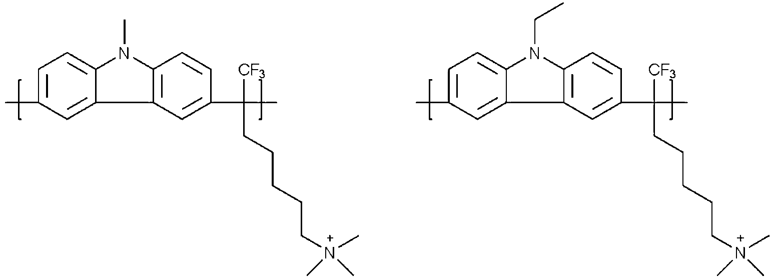

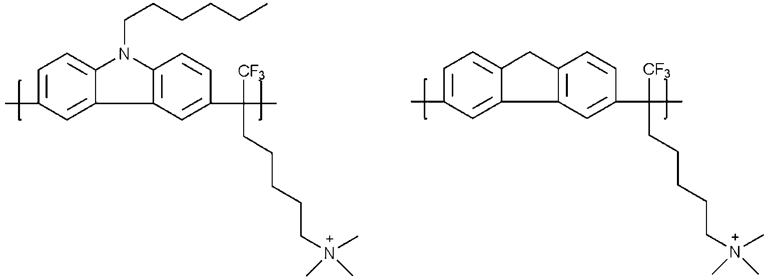

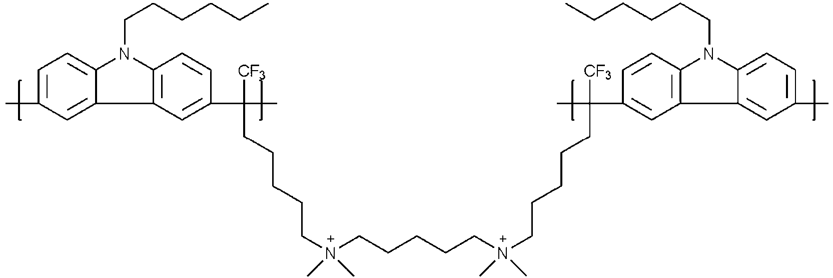

8. Material for anion exchange, comprising the polymer according to any one of claims 1 to 7.

9. A method for manufacturing polymer comprising:
reacting substituted or unsubstituted carbazole or fluorene with halogen-substituted alkyl trifluoromethyl ketone in the presence of an acid catalyst to polymerize (step 1); and
substituting substituted or unsubstituted amine for the polymer prepared in step 1 to form polymer comprising a quaternary ammonium ion represented by the Chemical Formula 1 or Chemical Formula 2 (step 2).

10. The method for manufacturing polymer according to claim 9, wherein the acid catalyst in the (step 1) is trifluoroacetic acid, trifluoromethanesulfonic acid or a mixture thereof.

11. The method for manufacturing polymer according to claim 9, wherein the (step 1) progresses in the presence of an organic solvent.

12. The method for manufacturing polymer according to claim 9, wherein the substituted or unsubstituted amine in the (step 2) is selected from the group consisting of trimethylamine, triethylamine and methylpiperidine.

13. The method for manufacturing polymer according to claim 9, wherein the (step 2) comprises substituting substituted or unsubstituted diamine for 2 or more polymers prepared, to form polymer comprising substituted or unsubstituted bis-ammonium having a C₁₋₁₀ hydrocarbon bridge.

14. The method for manufacturing polymer according to claim 13, wherein the substituted or unsubstituted diamine is selected from the group consisting of the following compounds:
